# EUROPEAN PATENT APPLICATION

(11) **EP 2 779 057 A1**
(43) Date of publication of application: **17.09.2014**
(21) Application number: 14159556.1
(22) Date of filing: 13.03.2014
(51) Int. Cl.: G06Q 10/10, G06Q 50/00

(54) **Computing system with relationship model mechanism and method of operation thereof**

(30) Priority: 15.03.2013 US 201361790275 P; 27.08.2013 US 201314011449
(71) Applicant: Samsung Electronics Co., Ltd., Suwon-si Gyeonggi-do 443-742 (KR)
(72) Inventor: Jin, Hongxia, San Jose, CA California 95129 (US)
(74) Representative: Jenkins, Richard Gavin

(57) **Abstract**

A computing system includes: a contact identification module configured to identify a contact-profile for representing a contact; a recording module, coupled to the contact identification module, configured to identify an interaction with the contact; a clustering module, coupled to the recording module, configured to generate a category cluster from processing the interaction; and a relationship modeling module, coupled to the clustering module, configured to generate a connection model including the category cluster for characterizing the interaction with the contact for displaying on a device.

## Description

### CROSS-REFERENCE TO RELATED APPLICATION

This application claims the benefit of U.S. Provisional Patent Application serial number 61/790,275 filed March 15, 2013.

### TECHNICAL FIELD

An embodiment of the present invention relates generally to a computing system, and more particularly to a system for modeling relationships.

### BACKGROUND

Modern consumer and industrial electronics, such as computing systems, televisions, tablets, cellular phones, portable digital assistants, projectors, and combination devices, are providing increasing levels of functionality to support modern life. In addition to the explosion of functionality and proliferation of these devices into the everyday life, there is also an explosion of data and information being created, transported, consumed, and stored.

Personalization is one mechanism to bring the right information to the right user despite the explosion of data. Personalization is most effective when the user shares information about oneself such that a provider can provide meaningful and contextual information to that user. However, sharing one's information often brings up privacy concerns in regards to different types or relationships. Research and development for handling privacy for various different relationships can take a myriad of different directions.

Thus, a need still remains for a computing system with social model mechanism balancing the user's concern for privacy while providing enough information to receive an acceptable benefit for sharing personal information. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### SUMMARY

An embodiment of the present invention provides a computing system, including: a contact identification module configured to identify a contact-profile for representing a contact; a recording module, coupled to the contact identification module, configured to identify an interaction with the contact; a clustering module, coupled to the recording module, configured to generate a category cluster from processing the interaction; and a relationship modeling module, coupled to the clustering module, configured to generate a connection model including the category cluster for characterizing the interaction with the contact for displaying on a device.

The relationship modeling module may be configured to generate the connection model including a categorical familiarity level associated with the category cluster.

The computing system may further comprise a context module, coupled to the contact identification module, configured to determine an environmental context for the interaction; and the clustering module is configured to generate the category cluster based on the environmental context.

The computing system may further comprise a context module, coupled to the contact identification module, configured to determine a relational context for the interaction; and the clustering module may be configured to generate the category cluster based on the relational context.

The relationship modeling module may be configured to generate the connection model based on a category-association value for evaluating the category cluster according to a category set.

The computing system may further comprise a candidate identification module, coupled to the relationship modeling module, configured to identify a candidate content; and a candidate analysis module, coupled to the candidate identification module, configured to generate a privacy policy based on the connection model for communicating the candidate content.

The candidate analysis module may be configured to generate the privacy policy based on determining a sharing target or a sharing threshold for communicating the candidate content.

The computing system may further comprise a setting adjustment module, coupled to the candidate analysis module, configured to receive an adjustment feedback for altering the privacy policy; and the relationship modeling module may be configured to update the connection model based on the adjustment feedback.

The computing system may further comprise a distribution module, coupled to the candidate analysis module, configured to communicate the candidate content based on the privacy policy; and the recording module may be configured to identify the interaction to include the candidate content.

An embodiment of the present invention provides a method of operation of a computing system including: identifying a contact-profile for representing a contact; identifying an interaction with the contact; generating a category cluster from processing the interaction; and generating a connection model including the category cluster with a control unit for characterizing the interaction with the contact for displaying on a device.

An embodiment of the present invention provides a non-transitory computer readable medium including: a contact identification module configured to identify a contact-profile for representing a contact; a recording module, coupled to the contact identification module, configured to identify an interaction with the contact; a clustering module, coupled to the recording module, configured to generate a category cluster from processing the interaction; and a relationship modeling module, coupled to the clustering module, configured to generate a connection model including the category cluster for characterizing the interaction with the contact for displaying on a device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a computing system with relationship model mechanism in an embodiment of the present invention.
FIG. 2 is an example display of the first device.
FIG. 3 is a functional block diagram of the computing system.
FIG. 4 is a control flow of the computing system.
FIG. 5 is a flow chart of a method of operation of a computing system in a further embodiment of the present invention.

### DETAILED DESCRIPTION

An embodiment of the present invention expresses and generates sharing options based on a contact with which a user shares an interaction, representing a relationship with the contact. A connection model can be generated to represent the relationship, with a category cluster therein to represent a nature or an aspect of the relationship. A categorical familiarity level can be determined to represent a familiarity or comfort level for the user with respect to the category cluster.

When the user wishes to share candidate content, the candidate content can be analyzed based on the connection model. Based on the analysis, a privacy policy can be generated to identify appropriate recipients for the candidate content.

The category cluster and the connection model provide an accurate representation of relationships. Further, the category cluster provides representation of various aspects within a relationship by using groupings and concepts instead of singular keyword or set categories. Moreover the categorical familiarity level corresponding to the category cluster provides an accurate representation of complex nature in various relationships. The privacy policy expresses the desired privacy level of the user for the candidate content.

Moreover, the connection model can be a multi-dimensional social model, which can evolve and extend based on the user's dynamic behavior. The present invention can update the connection model based on the user's dynamic behavior. The connection model can be used to express and generate ad-hoc and arbitrary instances of the privacy policy for controlling sharing of information and facilitate the user in managing privacy. A set of recipients that satisfy the policy can be identified and allowed to share the candidate content.

The following embodiments are described in sufficient detail to enable those skilled in the art to make and use the invention. It is to be understood that other embodiments would be evident based on the present disclosure, and that system, process, or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation.

One skilled in the art would appreciate that the format with which navigation information is expressed is not critical to some embodiments of the invention. For example, in some embodiments, navigation information is presented in the format of (X, Y); where X and Y are two coordinates that define the geographic location, i.e., a position of a user.

In an alternative embodiment, navigation information is presented by longitude and latitude related information. In a further embodiment of the present invention, the navigation information also includes a velocity element including a speed component and a heading component.

The term "relevant information" referred to herein can include the navigation information described as well as information relating to points of interest to the user, such as local business, hours of businesses, types of businesses, advertised specials, traffic information, maps, local events, and location based community or personal information.

The term "module" referred to herein can include software, hardware, or a combination thereof in the present invention in accordance with the context in which the term is used. For example, the software can be machine code, firmware, embedded code, and application software. The software can also include a function, a call to a function, a code block, or a combination thereof. Also for example, the hardware can be circuitry, processor, computer, integrated circuit, integrated circuit cores, a pressure sensor, an inertial sensor, a microelectromechanical system (MEMS), passive devices, physical non-transitory memory medium having instructions for performing the software function, or a combination thereof.

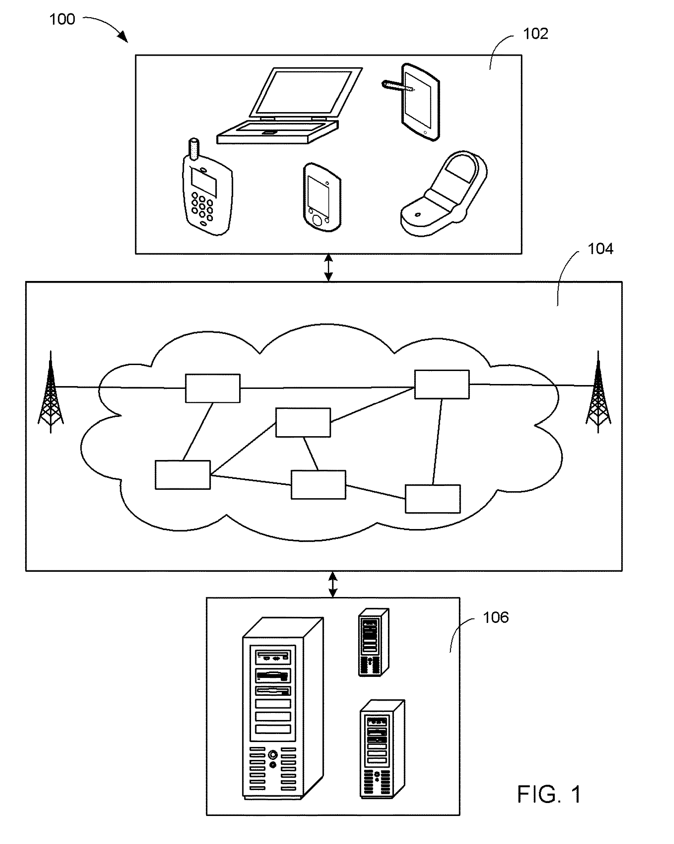

Referring now to FIG. 1, therein is shown a computing system 100 with relationship model mechanism in an embodiment of the present invention. The computing system 100 includes a first device 102, such as a client or a server, connected to a second device 106, such as a client or server. The first device 102 can communicate with the second device 106 with a communication path 104, such as a wireless or wired network.

Users of the first device 102, the second device 106, or a combination thereof can communicate with each other or access or create information including text, images, symbols, location information, and audio, as examples. The users can be individuals or enterprise companies. The information can be created directly from a user or operations performed on these information to create more or different information.

The first device 102 can be of any of a variety of devices, such as a smartphone, a cellular phone, personal digital assistant, a tablet computer, a notebook computer, or other multi-functional display or entertainment device. The first device 102 can couple, either directly or indirectly, to the communication path 104 for exchanging information with the second device 106 or can be a stand-alone device.

For illustrative purposes, the computing system 100 is described with the first device 102 as a portable multi-functional device, although it is understood that the first device 102 can be different types of devices. For example, the first device 102 can also be a device for presenting images or a multi-media presentation. A multi-media presentation can be a presentation including sound, a sequence of streaming images or a video feed, text or a combination thereof.

The second device 106 can be any of a variety of centralized or decentralized computing devices, or video transmission devices. For example, the second device 106 can be a multimedia computer, a laptop computer, a desktop computer, a video game console, grid-computing resources, a virtualized computer resource, cloud computing resource, routers, switches, peer-to-peer distributed computing devices, a media playback device, a recording device, such as a camera or video camera, or a combination thereof. In another example, the second device 106 can be a server at a service provider or a computing device at a transmission facility.

The second device 106 can be centralized in a single room, distributed across different rooms, distributed across different geographical locations, embedded within a telecommunications network. The second device 106 can couple with the communication path 104 to communicate with the first device 102.

For illustrative purposes, the computing system 100 is described with the second device 106 as a computing device, although it is understood that the second device 106 can be different types of devices. Also for illustrative purposes, the computing system 100 is shown with the second device 106 and the first device 102 as end points of the communication path 104, although it is understood that the computing system 100 can have a different partition between the first device 102, the second device 106, and the communication path 104. For example, the first device 102, the second device 106, or a combination thereof can also function as part of the communication path 104.

For further illustrative purposes, the computing system 100 is described with the first device 102 as a consumer device or a portable device, and with the second device 106 as a stationary or an enterprise device. However, it is understood that the first device 102 and the second device 106 can be any variety of devices. For example, the first device 102 can be a stationary device or an enterprise system, such as a television or a server. Also for example, the second device 106 can be a consumer device or a portable device, such as a smart phone or a wearable device.

The communication path 104 can span and represent a variety of network types and network topologies. For example, the communication path 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

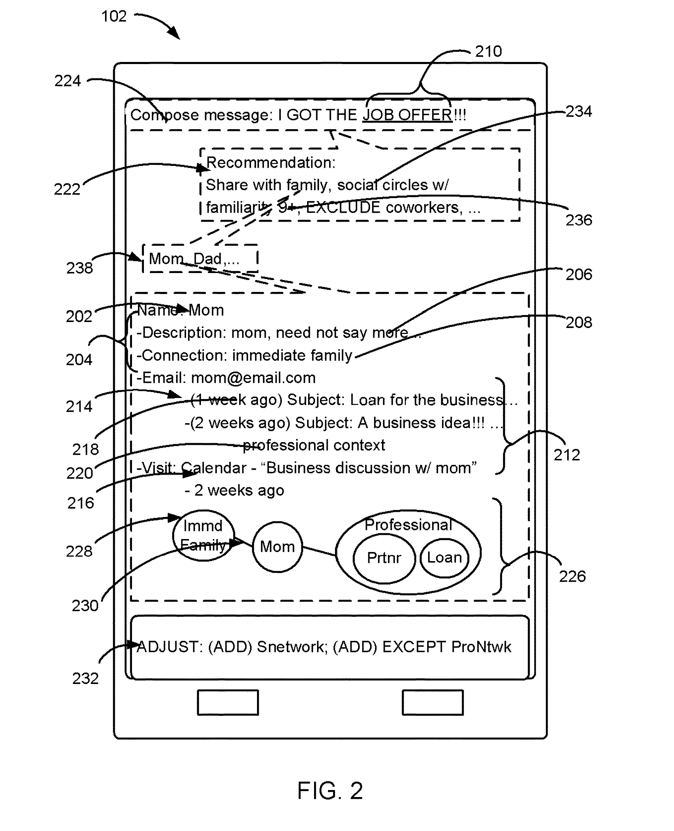

Referring now to FIG. 2, therein is shown an example display of the first device 102. The display can show a contact 202. The contact 202 is a person, a group, an entity, a location, or a combination thereof having rapport or connection with a user (not shown) of the first device 102.

For example, the contact 202 can include a family member, a colleague, a social acquaintance, a professional acquaintance, or a combination thereof. Also for example, the contact 202 can include a communication correspondent, such as through email or phone calls, a connection through an in-person meeting or introduction, or a combination thereof.

The contact 202 can be represented by a contact-profile 204. The contact-profile 204 is identification information representing the contact 202. The contact-profile 204 can include a description of the person, a group, an entity, a location, or a combination thereof. The contact-profile 204 can include a name, a location, such as an address or a set of coordinates representing a current location, a communication information, such as a phone number or an email address, dates or times, such as a birthday or meeting date, or a combination thereof associated with the person, the group, the entity, the location, or a combination thereof.

The contact-profile 204 can include a detail description 206, a connection type 208, or a combination thereof. The detail description 206 is information related to the nature of the rapport or connection between the user and the contact 202. For example, the detail description 206 can include a note or a set of keywords 210 provided by the user in free form. Also for example, the detail description 206 can include one or more of the keywords 210 frequently associated with the contact 202, such as found in scheduling information or in communications with the person, the group, the entity, the location, or a combination thereof.

The connection type 208 is a categorical description regarding the nature of the rapport or connection between the user and the contact 202. For example, the connection type 208 can include a specific label or title, such as personal, professional, family, coworker, parent, manager, client, or a combination thereof. Also for example, the connection type 208 can be based on semantic context or roles in the context of the relationship, physical presence of the user and the contact 202, virtual presence of the user and the contact 202, or a combination thereof.

The computing system 100 can include an interaction 212 with the contact 202, a device, or a combination thereof. The interaction 212 is a record of an activity or a representation thereof involving more than one party. For example, the interaction 212 can include a communication 214, an in-person interface 216, or a combination thereof.

The communication 214 can be an exchange of information, such as through speaking and listening, sending and receiving data, presenting and viewing, or a combination thereof. For example, the communication 214 can be represented by the phone call content or history, message history, emails, document access history, upload or download log, or a combination thereof.

The in-person interface 216 can be the activity involving direct communications and reactions between persons. For example, the in-person interface 216 can be represented by location history, such as multiple parties being present at the same location at the same time, calendar information, such as meeting schedules or appointment details, a record for direct exchange of contact information, common membership, attendance record, or a combination thereof.

The interaction 212 can further include a context for the interaction 212, such as an environmental context 218, a relational context 220, or a combination thereof. The environmental context 218 is a description of the general situation surrounding the interaction 212 for describing significance or purpose of the interaction 212.

For example, the environmental context 218 can include time, location, event, purpose, or a combination thereof for the interaction 212. Also for example, the environmental context 218 can include abstract concepts or categorizations, such as entertainment, professional, educational, amount of importance or significance, first interaction or meeting, final or symbolic event, or a combination thereof.

The relational context 220 is a description of the specific situation or role applicable to the persons involved in the interaction 212for describing significance or purpose of the interaction 212. The relational context 220 can be relevant when the contact 202 has multiple types of relationship with the user. The relational context 220 can highlight the relationship relevant to the interaction 212.

For example, the relational context 220 can describe the communication 214 to or from a colleague speaking as a friend rather than a coworker as being personal in nature and reflecting a social relationship rather than work context. Also for example, the relational context 220 can describe the in-person interface 216 for a business purpose between family members as primarily being business related over social purposes, and categorize the contacting party as a business contact for the purpose of such instance of the in-person interface 216.

The computing system 100 can display a privacy policy 222 for a candidate content 224. The candidate content 224 is data intended for sharing. The candidate content 224 can be data that has not been made externally available. The candidate content 224 can become the interaction 212 after the information is shared with the contact 202, a service provider, another device, or a combination thereof. For example, the candidate content 224 can include an email, a file, an image, a contact information, user supplied information, or a combination thereof that has not been shared or only have been shared with a limit group other than the currently intended target.

The candidate content 224 can be information local to the first device 102, the second device 106, a specific instance of the contact 202, or a combination thereof or stored on a remote device. The candidate content 224 can be information that has not been sent, posted, uploaded, stored remotely, or a combination thereof with regard to any device, service, or person other than that of the user, or with regard to a specific device, service, or person other than that of the user.

The privacy policy 222 is a communication to the user regarding access to the candidate content 224 based on sharing the candidate content 224. The privacy policy 222 can include a warning, a setting, a message, a control option, or a combination thereof intended for the user regarding access to the candidate content 224.

The privacy policy 222 can be regarding access by any device, service, or person other than that of the user, such as by viewing, downloading, storing, searching, altering, or a combination of processes thereof for the candidate content 224. The privacy policy 222 can be based on a possibility of the user sharing, such as by displaying, recreating sounds, performing instructions, sending or transmitting, storing, altering a setting, posting, accepting a link or an invitation, or a combination thereof, with any device, service, or person other than that of the user.

For example, the privacy policy 222 can be a warning or a policy setting for sending or storing protected information on a public server or website. Also for example, the privacy policy 222 can be a proposed grouping of recipients or requisite level of familiarity with the user for allowing access to the candidate content 224.

The privacy policy 222 can be based on a connection model 226. The connection model 226 is a representation of the nature of the rapport or connection between the user and the contact 202. The connection model 226 can be associated with the connection type 208 or include information further detailed than the connection type 208, or both. The privacy policy 222can describe and represent different aspects or areas within the relationship using multiple dimensions, each dimension representing a unique aspect of the relationship. The connection model 226 can also be a processing-related description for sharing the candidate content 224.

The connection model 226 can be a computing model for the nature of the rapport or connection. The computing system 100 can generate the connection model 226 using processes based on patterns, associations, clustering, predictions, grouping, or a combination thereof for instances of the interaction 212. Details regarding the generation of the connection model 226 will be discussed below.

The connection model 226 can include a category cluster 228 having a categorical familiarity level 230. The category cluster 228 is a grouping of items commonly associated according to a criteria or a method. The category cluster 228 can include items commonly associated to each other, to a logical concept, to a category, to a specific data, or a combination thereof. The category cluster 228 can be a grouping of the keywords 210, instances of the interaction 212, or a combination thereof.

The category cluster 228 can represent an area, a category, a subject, an aspect, or a combination thereof regarding the contact 202, the user, the relationship between the contact 202 and the user, or a combination thereof. For example, the category cluster 228 can be a title, a sub-categorization, a value, or a combination thereof representing a portion or aspect of the relationship between the user and the contact 202. Also for example, the category cluster 228 can be a set of keywords, concepts, categories, or a combination thereof used in associated with a specific instance of a relationship, a specific subject, a commonly shared interest, or a combination thereof.

The category cluster 228 can have multiple instances overlapping each other. The category cluster 228 can have multiple instances where one is a subcategory within another. The category cluster 228 can further represent a specific rule or a process, an exception to the relationship or any predetermined patterns or processes, or a combination thereof.

The categorical familiarity level 230 is a representation of comfort level, trust, appropriateness, familiarity, or a combination thereof associated with the category cluster 228 for the relationship between the user and the contact 202. The categorical familiarity level 230can represent emotional closeness, physical closeness, similarity level, or a combination thereof between the user and the contact 202 in the relationship, specific to an aspect of the relationship, or a combination thereof.

The categorical familiarity level 230 can be a quantification of a strength, an importance, interest, closeness, or a combination thereof for the user, the contact 202, or a combination thereof regarding the category cluster 228.

The computing system 100 can interact with the user to receive an adjustment feedback 232 based on the privacy policy 222. The adjustment feedback 232 is information provided by the user regarding data intended for sharing. The adjustment feedback 232 can be based on the privacy policy 222.

For example, the adjustment feedback 232 can be an approval or an acknowledgment of the privacy policy 222, or can be a correction or an adjustment to the privacy policy 222. As a more specific example, the adjustment feedback 232 can be changes to grouping, to targets for sharing, to requirements, or a combination thereof to the privacy policy 222 for accessing the candidate content 224 after sharing the candidate content 224.

The computing system 100 can generate the connection model 226associated with the contact 202 based on the interaction 212 between the user and the contact 202, other users, service provider, devices, or a combination thereof. The computing system 100 can use the connection model 226 to generate the privacy policy 222 before the user shares the candidate content 224.

The privacy policy 222 can further include a sharing target 234, a sharing threshold 236, or a combination thereof. The sharing target 234 is the intended or allowed recipients for the shared information. The sharing target can be one or more instance of the contact 202, such as individuals or websites, a group based on the category cluster 228, or a combination thereof.

The sharing threshold 236 can be a measurable limitation required for providing the information. For example, the sharing threshold 236 can be a minimum level for the categorical familiarity level 230, required presence or absence of a specific instance of the category cluster 228 or the connection type 208, a geographical requirement for the detail description 206, or a combination thereof.

The computing system 100 can receive the adjustment feedback 232 regarding the privacy policy 222. The computing system can generate a privacy setting 238 based on the connection model 226, the privacy policy 222, the adjustment feedback 232, or a combination thereof.

The privacy setting 238 is a set of contacts, instructions, values, or a combination thereof for implementing the sharing process. The privacy setting 238 can include a method of sharing, such as email or uploading, a destination, such as a website address or a phone number, detailed individual contact information corresponding to a group, or a combination thereof. The privacy setting 238 can also include a method of sharing, a destination, a detailed set of contact information, or a combination thereof excluded from implementing the sharing process.

The privacy setting 238 can include limitations or requirements, such as membership or password, for accessing the shared content. The computing system 100 can share the candidate content 224according to the privacy setting 238. Details regarding the above process for the computing system 100 will be discussed below.

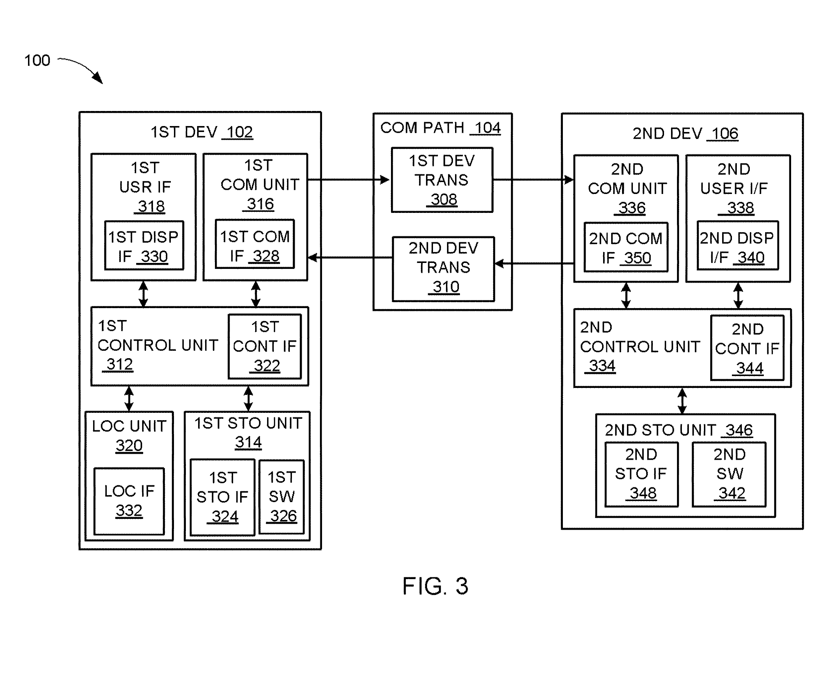

Referring now to FIG. 3, therein is shown an exemplary block diagram of the computing system 100. The computing system 100 can include the first device 102, the communication path 104, and the second device 106. The first device 102 can send information in a first device transmission 308 over the communication path 104 to the second device 106. The second device 106 can send information in a second device transmission 310 over the communication path 104 to the first device 102.

For illustrative purposes, the computing system 100 is shown with the first device 102 as a client device, although it is understood that the computing system 100 can have the first device 102 as a different type of device. For example, the first device 102 can be a server having a display interface.

Also for illustrative purposes, the computing system 100 is shown with the second device 106 as a server, although it is understood that the computing system 100 can have the second device 106 as a different type of device. For example, the second device 106 can be a client device.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control unit 312, a first storage unit 314, a first communication unit 316, and a first user interface 318, and a location unit 320. The first control unit 312 can include a first control interface 322. The first control unit 312 can execute a first software 326 to provide the intelligence of the computing system 100.

The first control unit 312 can be implemented in a number of different manners. For example, the first control unit 312 can be a processor, an application specific integrated circuit (ASIC) an embedded processor, a microprocessor, a hardware control logic, a hardware finite state machine (FSM), a digital signal processor (DSP), or a combination thereof. The first control interface 322 can be used for communication between the first control unit 312 and other functional units in the first device 102. The first control interface 322 can also be used for communication that is external to the first device 102.

The first control interface 322 can receive information from the other functional units or from external sources, or can transmit information to the other functional units or to external destinations. The external sources and the external destinations refer to sources and destinations external to the first device 102.

The first control interface 322 can be implemented in different ways and can include different implementations depending on which functional units or external units are being interfaced with the first control interface 322. For example, the first control interface 322 can be implemented with a pressure sensor, an inertial sensor, a microelectromechanical system (MEMS), optical circuitry, waveguides, wireless circuitry, wireline circuitry, or a combination thereof.

The first storage unit 314 can store the first software 326. The first storage unit 314 can also store the relevant information, such as data representing incoming images, data representing previously presented image, sound files, or a combination thereof.

The first storage unit 314 can be a volatile memory, a nonvolatile memory, an internal memory, an external memory, or a combination thereof. For example, the first storage unit 314 can be a nonvolatile storage such as non-volatile random access memory (NVRAM), Flash memory, disk storage, or a volatile storage such as static random access memory (SRAM).

The first storage unit 314 can include a first storage interface 324. The first storage interface 324 can be used for communication between the first storage unit 314 and other functional units in the first device 102. The first storage interface 324 can also be used for communication that is external to the first device 102.

The first storage interface 324 can receive information from the other functional units or from external sources, or can transmit information to the other functional units or to external destinations. The external sources and the external destinations refer to sources and destinations external to the first device 102.

The first storage interface 324 can include different implementations depending on which functional units or external units are being interfaced with the first storage unit 314. The first storage interface 324 can be implemented with technologies and techniques similar to the implementation of the first control interface 322.

The first communication unit 316 can enable external communication to and from the first device 102. For example, the first communication unit 316 can permit the first device 102 to communicate with the second device 106 of FIG. 1, an attachment, such as a peripheral device or a desktop computer, and the communication path 104.

The first communication unit 316 can also function as a communication hub allowing the first device 102 to function as part of the communication path 104 and not limited to be an end point or terminal unit to the communication path 104. The first communication unit 316 can include active and passive components, such as microelectronics or an antenna, for interaction with the communication path 104.

The first communication unit 316 can include a first communication interface 328. The first communication interface 328 can be used for communication between the first communication unit 316 and other functional units in the first device 102. The first communication interface 328 can receive information from the other functional units or can transmit information to the other functional units.

The first communication interface 328 can include different implementations depending on which functional units are being interfaced with the first communication unit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a first display interface 330. The first display interface 330 can include an output device, such as the display interface 202 of FIG. 2. The first display interface 330 can include a display, a projector, a video screen, a speaker, or any combination thereof.

The first control unit 312 can operate the first user interface 318 to display information generated by the computing system 100. The first control unit 312 can also execute the first software 326 for the other functions of the computing system 100, including receiving location information from the location unit 320. The first control unit 312 can further execute the first software 326 for interaction with the communication path 104 via the first communication unit 316.

The location unit 320 can generate location information, current heading, current acceleration, and current speed of the first device 102, as examples. The location unit 320 can be implemented in many ways. For example, the location unit 320 can function as at least a part of the global positioning system, an inertial computing system, a cellular-tower location system, a pressure location system, or any combination thereof. Also, for example, the location unit 620 can utilize components such as an accelerometer or GPS receiver.

The location unit 320 can include a location interface 332. The location interface 332 can be used for communication between the location unit 320 and other functional units in the first device 102. The location interface 632 can also be used for communication external to the first device 102.

The location interface 332 can receive information from the other functional units or from external sources, or can transmit information to the other functional units or to external destinations. The external sources and the external destinations refer to sources and destinations external to the first device 102.

The location interface 332 can include different implementations depending on which functional units or external units are being interfaced with the location unit 320. The location interface 332 can be implemented with technologies and techniques similar to the implementation of the first control unit 312.

The second device 106 can be optimized for implementing an embodiment of the present invention in a multiple device embodiment with the first device 102. The second device 106 can provide the additional or higher performance processing power compared to the first device 102. The second device 106 can include a second control unit 334, a second communication unit 336, a second user interface 338, and a second storage unit 346.

The second user interface 338 allows a user (not shown) to interface and interact with the second device 106. The second user interface 338 can include an input device and an output device. Examples of the input device of the second user interface 338 can include a keypad, a touchpad, soft-keys, a keyboard, a microphone, or any combination thereof to provide data and communication inputs. Examples of the output device of the second user interface 338 can include a second display interface 340. The second display interface 340 can include a display, a projector, a video screen, a speaker, or any combination thereof.

The second control unit 334 can execute a second software 342 to provide the intelligence of the second device 106 of the computing system 100. The second software 342 can operate in conjunction with the first software 326. The second control unit 334 can provide additional performance compared to the first control unit 312.

The second control unit 334 can operate the second user interface 338 to display information. The second control unit 334 can also execute the second software 342 for the other functions of the computing system 100, including operating the second communication unit 336 to communicate with the first device 102 over the communication path 104.

The second control unit 334 can be implemented in a number of different manners. For example, the second control unit 334 can be a processor, an embedded processor, a microprocessor, hardware control logic, a hardware finite state machine (FSM), a digital signal processor (DSP), or a combination thereof.

The second control unit 334 can include a second control interface 344. The second control interface 344 can be used for communication between the second control unit 334 and other functional units in the second device 106. The second control interface 344 can also be used for communication that is external to the second device 106.

The second control interface 344 can receive information from the other functional units or from external sources, or can transmit information to the other functional units or to external destinations. The external sources and the external destinations refer to sources and destinations external to the second device 106.

The second control interface 344 can be implemented in different ways and can include different implementations depending on which functional units or external units are being interfaced with the second control interface 344. For example, the second control interface 344 can be implemented with a pressure sensor, an inertial sensor, a microelectromechanical system (MEMS), optical circuitry, waveguides, wireless circuitry, wireline circuitry, or a combination thereof.

A second storage unit 346 can store the second software 342. The second storage unit 346 can also store the information such as data representing incoming images, data representing previously presented image, sound files, or a combination thereof.. The second storage unit 346 can be sized to provide the additional storage capacity to supplement the first storage unit 314.

For illustrative purposes, the second storage unit 346 is shown as a single element, although it is understood that the second storage unit 346 can be a distribution of storage elements. Also for illustrative purposes, the computing system 100 is shown with the second storage unit 346 as a single hierarchy storage system, although it is understood that the computing system 100 can have the second storage unit 346 in a different configuration. For example, the second storage unit 346 can be formed with different storage technologies forming a memory hierarchal system including different levels of caching, main memory, rotating media, or off-line storage.

The second storage unit 346 can be a volatile memory, a nonvolatile memory, an internal memory, an external memory, or a combination thereof. For example, the second storage unit 346 can be a nonvolatile storage such as non-volatile random access memory (NVRAM), Flash memory, disk storage, or a volatile storage such as static random access memory (SRAM).

The second storage unit 346 can include a second storage interface 348. The second storage interface 348 can be used for communication between the second storage unit 346 and other functional units in the second device 106. The second storage interface 348 can also be used for communication that is external to the second device 106.

The second storage interface 348 can receive information from the other functional units or from external sources, or can transmit information to the other functional units or to external destinations. The external sources and the external destinations refer to sources and destinations external to the second device 106.

The second storage interface 348 can include different implementations depending on which functional units or external units are being interfaced with the second storage unit 346. The second storage interface 348 can be implemented with technologies and techniques similar to the implementation of the second control interface 344.

The second communication unit 336 can enable external communication to and from the second device 106. For example, the second communication unit 336 can permit the second device 106 to communicate with the first device 102 over the communication path 104.

The second communication unit 336 can also function as a communication hub allowing the second device 106 to function as part of the communication path 104 and not limited to be an end point or terminal unit to the communication path 104. The second communication unit 336 can include active and passive components, such as microelectronics or an antenna, for interaction with the communication path 104.

The second communication unit 336 can include a second communication interface 350. The second communication interface 350 can be used for communication between the second communication unit 336 and other functional units in the second device 106. The second communication interface 350 can receive information from the other functional units or can transmit information to the other functional units.

The second communication interface 350 can include different implementations depending on which functional units are being interfaced with the second communication unit 336. The second communication interface 350 can be implemented with technologies and techniques similar to the implementation of the second control interface 344.

The first communication unit 316 can couple with the communication path 104 to send information to the second device 106 in the first device transmission 308. The second device 106 can receive information in the second communication unit 336 from the first device transmission 308 of the communication path 104.

The second communication unit 336 can couple with the communication path 104 to send information to the first device 102 in the second device transmission 310. The first device 102 can receive information in the first communication unit 316 from the second device transmission 310 of the communication path 104. The computing system 100 can be executed by the first control unit 312, the second control unit 334, or a combination thereof. For illustrative purposes, the second device 106 is shown with the partition having the second user interface 338, the second storage unit 346, the second control unit 334, and the second communication unit 336, although it is understood that the second device 106 can have a different partition. For example, the second software 342 can be partitioned differently such that some or all of its function can be in the second control unit 334 and the second communication unit 336. Also, the second device 106 can include other functional units not shown in FIG. 3 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the computing system 100 is described by operation of the first device 102 and the second device 106. It is understood that the first device 102 and the second device 106 can operate any of the modules and functions of the computing system 100.

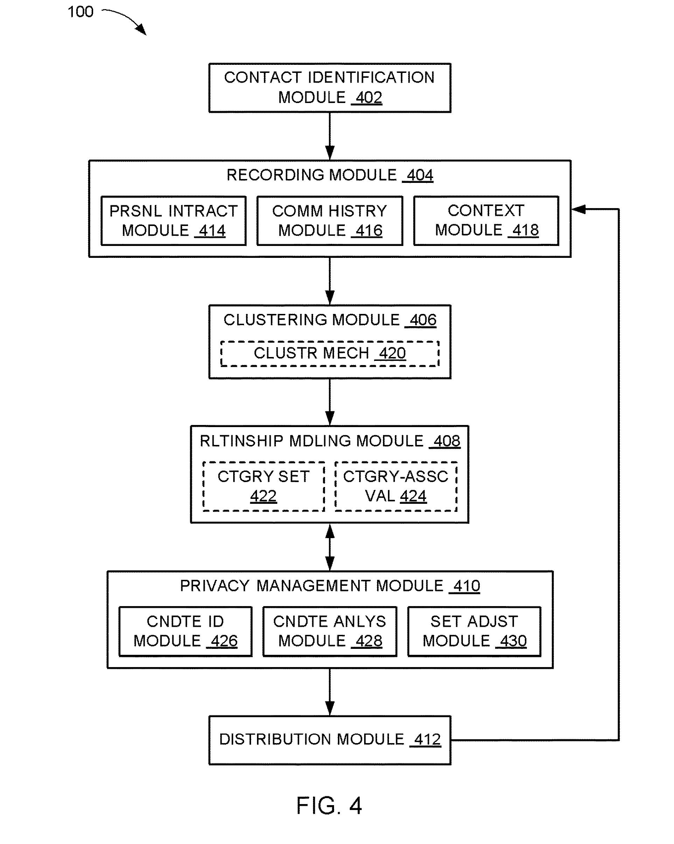

Referring now to FIG. 4, therein is shown a control flow of the computing system 100. The computing system 100 can include a contact identification module 402, a recording module 404, a clustering module 406, a relationship modeling module 408, a privacy management module 410, and a distribution module 412.

The contact identification module 402 can be coupled to the recording module 404 using wired or wireless connections, by having an output of one module as an input of the other module, by having operations of one module influence operation of the other module, or a combination thereof. Similarly, the recording module 404 can be coupled to the clustering module 406, the distribution module 412, or a combination thereof. Moreover, the clustering module 406 can be similarly coupled to the relationship modeling module 408, which can be coupled to the privacy management module 410, and the privacy management module 410 can be further coupled to the distribution module 412.

The contact identification module 402 is configured to identify the contact-profile 204 of FIG. 2 for representing the contact 202 of FIG. 2. The contact identification module 402 can identify the contact-profile 204 using a variety of methods.

For example, the contact identification module 402 can use the first communication unit 316 of FIG. 3, the second communication unit 336 of FIG. 3, or a combination thereof to search the user's social network connections. The contact identification module 402 can identify the contact-profile 204 by storing contact or identification information, such as email number or web address, profile information, name, or a combination thereof, by identifying a stored location of such information, or a combination thereof as the contact-profile 204.

Also for example, the contact identification module 402 can search an address or phone list stored in the first storage unit 314 of FIG. 3, the second storage unit 346 of FIG. 3, or a combination thereof. The contact identification module 402 can set the identification and associated correspondence information as the contact-profile 204.

For further example, the contact identification module 402 can use the first control interface 322 of FIG. 3, the second control interface 344 of FIG. 3, or a combination thereof to search previously used contact information, such as phone numbers or email address. The contact identification module 402 can set the previously-used correspondence information as the contact-profile 204.

Also for further example, the contact identification module 402 can use the first user interface 318, the second user interface 338, or a combination thereof to receive input from the user. The contact identification module 402 can identify the contact 202 and the contact-profile 204 using the input directly from the user.

As a more specific example, the contact identification module 402 can receive the information corresponding to the user adding an instance of the contact 202 on a social website, an address book, into a specific device, or a combination thereof. The contact identification module 402 can use the information, such as tags or free-form text associated with the contact 202, to identify the contact-profile 204.

The contact identification module 402 can include a correspondence mechanism in the contact-profile 204. The contact identification module 402 can include one or more available, previously-used, user-authorized, or a combination thereof for methods or medium associated with the specific instance of the contact 202 as the correspondence mechanism. For example, the contact identification module 402 can include social network messaging, email, uploads to publishing or posting site, or a combination thereof as the correspondence mechanism associated with the specific instance of the contact 202 in the associated instance of the contact-profile 204.

After identifying the contact-profile 204, the control flow can pass from the contact identification module 402 to the recording module 404. The control flow can pass by having the contact-profile 204as an output from the contact identification module 402 to an input of the recording module 404, storing the contact-profile 204at a location known and accessible to the recording module 404, by notifying the recording module 404, such as by using a flag, an interrupt, a status signal, or a combination thereof, or a combination of processes thereof.

The recording module 404 is configured to identify the interaction 212 with the contact 202. The recording module 404 can identify the interaction 212 by processing the data transmitted, received, accessed, stored, or a combination thereof with the first communication unit 316, the second communication unit 336, or a combination thereof. The recording module 404 can further identify the interaction 212 by analyzing location-based information associated with the user, the contact 202, or a combination thereof.

The recording module 404 can include a personal interaction module 414, a communication history module 416, a context module 418, or a combination thereof for identifying the interaction 212. The personal interaction module 414 is configured to process for the in-person interface 216 of FIG. 2 for identifying the interaction 212. The personal interaction module 414 can process for the in-person interface 216 by determining the in-person interface 216 based on location information of the user.

For example, the personal interaction module 414 can determine the in-person interface 216 with the contact 202 when the navigational information of the user and the contact 202is within a threshold distance predetermined by the computing system 100, within an enclosed area, such as a boundary perimeter or a room, or a combination thereof. The navigational information of the user can be determined by the location unit 320 of FIG. 3. The navigational information of the contact 202 can be received using the first communication unit 316, the second communication unit 336, or a combination thereof.

Also for example, the personal interaction module 414 can determine the in-person interface 216 with the contact 202 based on the user's calendar, the calendar of the contact 202, an attendance record or signup, or a combination thereof. As a more specific example, the personal interaction module 414 can determine the in-person interface 216 based on meetings, appointments, or a combination thereof scheduled between the user and the contact 202. The personal interaction module 414 can use a scheduled calendar event, exchange or confirmation thereof, a follow-up message related thereof, or a combination thereof to determine the in-person interface 216.

The communication history module 416 is configured to process the communication 214 of FIG. 2 for identifying the interaction 212. The communication history module 416 can process for the communication 214 to identify the interaction 212 with the contact 202.

For example, the communication history module 416 can search stored instances of communicated content using the first storage interface 324 of FIG. 3, the second storage interface 348 of FIG. 3, or a combination thereof. As a more specific example, the communication history module 416 can search sent or received instances of emails, text-based messages, images, links, connections, invitations, or a combination thereof. As a further specific example, the communication history module 416 can search a call-log, the user's calendar, mail log, or a combination thereof.

The communication history module 416 can process the communication 214 for identifying the interaction 212 by determining the communicated content from, to, copied for, or a combination thereof involving the contact 202. The communication history module 416 can identify the communicated content having the information contained in the contact-profile 204 therein as the interaction 212 involving the contact 202.

The context module 418 is configured to determine contextual information regarding the interaction 212. The context module 418 can determine the environmental context 218 of FIG. 2, the relational context 220 of FIG. 2, or a combination thereof for the interaction 212.

The context module 418 can determine the environmental context 218 by processing environmental data. For example, the context module 418 can determine the environmental context 218 based on time, location of the user, identity of the contact 202 close enough for the in-person interface 216, or a combination thereof associated with the interaction 212. Also for example, the context module 418 can determine the environmental context 218 based on the information being accessed or recently accessed by the user, such as search string or title of the slide being projected in view of the user, in association with the interaction 212.

For further example, the context module 418 can use the user's calendar or schedule, the communication 214 before, during, or after the interaction 212, or a combination thereof to determine the environmental context 218. As a more specific example, the environmental data can include a title for the reminder or meeting, specific instances of the keywords 210 of FIG. 2 in one or a series of communications leading up to determining of the time and place of the in-person interface 216, follow-up instances of the communication 214 after the in-person interface 216, or a combination thereof.

The context module 418 can use the environmental data to determine a purpose, a goal, a meaning, a significance, a category, or a combination thereof associated with the interaction 212. The context module 418 can use an environmental list of the environmental data associated with various values representing the purpose, the goal, the meaning, the significance, the category, or a combination thereof predetermined by the computing system 100. The context module 418 can determine the environmental context 218 as one or more values corresponding to the environmental data.

The context module 418 can determine the relational context 220 using a similar method. For example, the context module 418 can determine the relational context 220 based on the environmental data, such as content and nature of the communication 214 based on the keywords 210, time and location of the in-person interface 216, the connection type 208 as described by the contact 202 or the user, the connection type 208 as determined by the computing system 100, or a combination thereof.

The context module 418 can further determine the relational context 220 using a relational listing of the environmental data associated with various values representing the purpose, the goal, the meaning, the significance, the category, or a combination thereof predetermined by the computing system 100 and different from the environmental list. The context module 418 can set the purpose, the goal, the meaning, the significance, the category, or a combination thereof associated with the environmental data in the relational list as the relational context 220.

The context module 418 can also use other methods involving machine learning, conceptual recognition, pattern recognition, abstraction using the keywords 210, or a combination thereof. The context module 418 can store the environmental context 218, the relational context 220, or a combination thereof for the interaction 212 in the first storage unit 314, the second storage unit 346, or a combination thereof.

After identifying the interaction 212, the control flow can pass from the recording module 404 to the clustering module 406. The control flow can pass similarly as described above between the contact identification module 402 and the recording module 404, but using the interaction 212 instead of the contact-profile 204 or in addition to the contact-profile 204.

The clustering module 406 is configured to generate the category cluster 228 corresponding to the contact 202. The clustering module 406 can generate the category cluster 228 of FIG. 2 based on the interaction 212 or portions therein, such as the environmental context 218 or the relational context 220, the contact-profile 204, or a combination thereof.

The clustering module 406 can include a cluster mechanism 420. The cluster mechanism 420 is a method or a set of instructions for processing data for determining the category cluster 228. The cluster mechanism 420 can include a sequence for the method or the set of instructions. The cluster mechanism 420 can further include an input restriction for the data processed in determining the category cluster 228. For example, the cluster mechanism 420 can include a list of the keywords 210, a specific set of routines for an instance of the connection type 208 of FIG. 2, or a combination thereof. Also for example, the cluster mechanism 420 can include representing each cluster with a mean vector, modeling clusters using statistical distribution or distance connectivity, or a combination thereof.

The clustering module 406 can use the cluster mechanism 420 to analyze the interaction 212, the contact-profile 204, or a combination thereof. For example, the clustering module 406 can process the keywords 210 in the contact-profile 204, the communication 214 or the in-person interface 216, or a combination thereof according to the cluster mechanism 420 to generate the category cluster 228. Also for example, the clustering module 406 can process the images, schedule information, the environmental context 218, the relational context 220, or a combination thereof according to the cluster mechanism 420 to generate the category cluster 228.

The clustering module 406 can generate multiple instances of the category cluster 228. The clustering module 406 can generate the multiple instances of the category cluster 228 to overlap, and can further include where one instance is included or functions as a sub-category within an encompassing instance of the category cluster 228. The interaction 212 or an instance of the keywords 210 can be included in multiple instances of the category cluster 228. The clustering module 406 can generate the category cluster 228 for a type or an aspect of the nature of relationship between the user and the contact 202.

For example, the contact 202 can be the user's manager at work, maintaining a typical professional working relationship where sharing of non-work-related information is minimal. However, the contact 202 and the user can be very close when it comes to a shared interest, such as a sport or a hobby. The clustering module 406 can generate an instance of the category cluster 228 corresponding to the professional relationship and a separate instance of the category cluster 228 corresponding to the shared interest. The cluster corresponding to the professional relationship can overlap the cluster corresponding to the shared interest, or encompass and include the cluster corresponding to the shared interest as a sub-cluster.

After generating the category cluster 228, the control flow can pass from the clustering module 406 to the relationship modeling module 408. The control flow can pass similarly as described above between the contact identification module 402 and the recording module 404, but using the category cluster 228 instead of the contact 202, or in addition to the contact-profile 204, the interaction 212, or a combination thereof.

The relationship modeling module 408 is configured to generate the connection model 226 of FIG. 2. The relationship modeling module 408 can generate the connection model 226 for representing a relationship, a closeness, a familiarity, or a combination thereof between the user and the contact 202. The relationship modeling module 408 can generate the connection model 226 for representing detailed aspects of the relationship, the closeness, the familiarity, or a combination thereof. The relationship modeling module 408 can further generate the connection model 226 for characterizing various instances of the interaction 212 with the contact 202.

The relationship modeling module 408 can generate the connection model 226 by determining a pattern, an association, or a combination thereof for the instances of the interaction 212 with the contact 202.The relationship modeling module 408 can generate the connection model 226 based on the category cluster 228.

The relationship modeling module 408 can generate the connection model 226 by determining a title or a description for each instance of the category cluster 228. For example, the clustering module 406 can use one or more instances of the keywords 210 based on associated analytical value, such as frequency of usage, mean-value, location within the cluster, or a combination thereof, the connection type 208, the environmental context 218 or the relational context 220 most frequently associated with the cluster, or a combination thereof as the title or the description of a specific instance of the category cluster 228.

The relationship modeling module 408 can generate the connection model 226 as a grouping of all instances of the category cluster 228 corresponding to a specific instance of the contact-profile 204. The relationship modeling module 408 can generate the connection model 226 as a representation of the relationship between the user and the contact 202 corresponding to the contact-profile 204. The relationship modeling module 408 can generate the connection model 226 with the instances of the category cluster 228 therein each representing a nature or aspect of the relationship or characterize a set of the interaction 212.

The relationship modeling module 408 can further generate the connection model 226based on semantic context or roles in the context of the relationship, physical presence of the user and the contact 202, virtual presence of the user and the contact 202, or a combination thereof. The relationship modeling module 408 can use specific instances of the keywords 210 to determine the semantic context. Further, the relationship modeling module 408can use location information, the category cluster 228, the contact-profile 204, the interaction 212, or a combination to determine the physical or virtual presence.

The relationship modeling module 408 can further generate the connection model 226 including the categorical familiarity level 230 of FIG. 2 associated with the category cluster 228. The relationship modeling module 408 can calculate the categorical familiarity level 230 based on the keywords 210, the contact-profile 204, the interaction 212, or a combination thereof.

For example, the relationship modeling module 408 can calculate the categorical familiarity level 230 based on frequency of usage of the keywords 210 or a quantitative measure representing an importance thereof. Also for example, the relationship modeling module 408 can calculate the categorical familiarity level 230 based on a quantitative measure representing a typical or average familiarity level of the connection type 208, which can be compared to the usage of the keywords, the environmental context 218, or the relational context 220.

For further example, the relationship modeling module 408 can calculate the categorical familiarity level 230 based on an amount or frequency of the interaction 212, either independently or along with the connection type 208 and the keywords 210. Also for further example, the relationship modeling module 408 can calculate the categorical familiarity level 230 based on an attribute of the category cluster 228, such as a size, a density, a mean value, or a combination thereof.

The relationship modeling module 408 can calculate the categorical familiarity level 230 to include exceptions, aspects that are sensitive or should be avoided, or a combination thereof. For example, the relationship modeling module 408 can calculate the categorical familiarity level 230 to include a flag for avoiding mention of a surprise party or a negative value when the interaction 212 includes hostile instances of the keywords 210.

The computing system 100 can process relationships to multiple instances of the contact 202 using the title or the description. For example, all social contacts that are tagged with the keywords 210 involved in a relationship can be determined as belonging to such relationship. Also for example, the categorical familiarity level 230 can be normalized across multiple instances of the contacts, across multiple users or instances of the connection model 226, or a combination thereof. The categorical familiarity level 230 can be relative to other instances of the category cluster 228 or within the connection model 226.

The relationship modeling module 408 can further generate the connection model 226 based on the contact-profile 204. The relationship modeling module 408 can generate the connection model 226 having the connection type 208, an instance of the keywords 210 in the detail description 206, or a combination thereof as an overarching category for the category cluster 228 in the connection model 226.

The relationship modeling module 408 can use the connection type 208, the detail description 206, or a combination thereof as a baseline value or a center point for the category cluster 228. The relationship modeling module 408 can further assign an initial value for the categorical familiarity level 230 based on the connection type 208, the detail description 206, or a combination thereof.

The relationship modeling module 408 can further generate the connection model 226 based on a category set 422, a category-association value 424, or a combination thereof. The category set 422 is a group of categories for organizing the connection model 226. The relationship modeling module 408 can use the category set 422similarly as the connection type 208 as a different baseline value or a different center point for the category cluster 228.

The category-association value 424 is a representation of affinity or degree of association between the category cluster 228 and one or more instances of categories in the category set 422. The relationship modeling module 408 can calculate the category-association value 424 similar to calculating the categorical familiarity level 230 for evaluating the category cluster 228 according to the category set 422. For example, the category-association value 424 can be based on the distance, the degree of association, overlap in defining instances of the keywords 210, or a combination thereof between one or more categories in the category set 422 and the category cluster 228.

It has been discovered that the category cluster 228 and the connection model 226 provide an accurate representation of relationships using multi-dimensional social model for the computing system 100. The category cluster 228 and the connection model 226 based on the contact-profile 204 and the interaction 212 can use groupings or patterns in words or contexts surrounding the relationships to describe the relationship instead of using limited set of predefined choices or categories.

Further, it has been discovered that the category cluster 228 provides representation of various aspects within a relationship by using groupings and concepts instead of singular keyword or set categories. It has also been discovered that the categorical familiarity level 230 corresponding to the category cluster 228 provides an accurate representation of complex nature in various relationships. The categorical familiarity level 230 corresponding to the category cluster 228 can provide a measureable representation of familiarity and comfort-level associated with each aspect of the relationship, rather than for an overall description of the relationship.

The relationship modeling module 408 can use the first control unit 312, the second control unit 334, or a combination thereof to generate the connection model 226. The relationship modeling module 408 can store the connection model 226 in the first storage unit 314, the second storage unit 346, or a combination thereof.

After generating the connection model 226, the control flow can pass from the relationship modeling module 408 to the privacy management module 410. The control flow can pass similarly as described above between the contact identification module 402 and the recording module 404.

The privacy management module 410 is configured to control the sharing of information. The privacy management module 410 can control the sharing of the candidate content 224 of FIG. 2. The privacy management module 410 can further control the sharing by generating the privacy policy 222 of FIG. 2. The privacy management module 410 can include a candidate identification module 426, a candidate analysis module 428, a setting adjustment module 430, or a combination thereof for controlling the sharing of the information.

The candidate identification module 426 is configured to identify the candidate content 224. The candidate identification module 426 can use the first user interface 318, the second user interface 338, or a combination thereof to identify the candidate content 224.

For example, the candidate identification module 426 can identify the candidate content 224 as the image captured or downloaded by the user. Also for example, the candidate identification module 426 can identify the candidate content 224 as a message or a file provided or selected by the user for sharing, such as through messaging application or at a publishing website.

The candidate identification module 426 can identify the candidate content 224 as the user composes, downloads, stores, or a combination thereof for sharing the content. The candidate identification module 426 can also identify the candidate content 224 when the user selects sharing and before the content is transferred or communicated for sharing. For example, the candidate identification module 426 can identify the candidate content 224 when the user selects send or upload operation and before executing corresponding send or upload instructions.

The candidate analysis module 428 is configured to generate controls for managing privacy and access for the candidate content 224. The candidate analysis module 428 can generate the privacy policy 222 for sharing or communicating the candidate content 224.

The candidate analysis module 428 can generate the privacy policy 222 based on the candidate content 224, the connection model 226, or a combination thereof. The candidate analysis module 428 can generate the privacy policy 222 by determining the sharing target 234 of FIG. 2, the sharing threshold 236 of FIG. 2, or a combination thereof or a combination thereof based on the candidate content 224.

The candidate analysis module 428 can determine the sharing target 234 by determining a candidate subject. The candidate analysis module 428 can generate the privacy policy 222 based on the connection model 226 to determine the sharing target 234 as a set of recipients allowed to share the candidate content 224. The privacy policy 222 can specify the sharing target 234.

The candidate analysis module 428 can determine the candidate subject of the candidate content 224 based on the subject line of the message, the keywords 210, title of files, description for the files, or a combination thereof. The candidate analysis module 428 can further determine the candidate subject by comparing the candidate content 224 to the category cluster 228 in the connection model 226.

For example, the candidate analysis module 428 can compare the keywords 210 in the candidate content 224 to one or more instances of the category cluster 228, within one instance of the connection model 226 or across multiple instances of the connection model 226, or a combination thereof. The comparison can be based on matching the keywords 210, calculating distances, statistical analysis, or a combination thereof based on the candidate content 224 and the category cluster 228. The comparison can be similar or related to the clustering process described above.

Also for example, the candidate analysis module 428 can determine the environmental context 218, the relational context 220, or a combination thereof corresponding to the candidate content 224. The candidate analysis module 428 can compare the various contexts corresponding to the category cluster 228.

The candidate subject can be the title or identification of one or more instances of the category cluster 228 matching or associated with the candidate content 224. The candidate analysis module 428 can determine the sharing target 234 as correspondence information in the contact-profile 204 of the contact 202 having the category cluster 228 in the connection model 226 matching the candidate subject of the candidate content 224.

The candidate analysis module 428 can also determine the sharing target 234 by comparing the candidate content 224 with the category cluster 228 directly and without determining the candidate subject. The candidate analysis module 428 can determine the sharing target 234 as correspondence information in the contact-profile 204 of the contact 202 having the category cluster 228 matching or associated with the candidate content 224. The candidate analysis module 428 can compare as described above, such as by matching the keywords 210 or calculating distances. The candidate analysis module 428 can determine the sharing target 234 as correspondence information in the contact-profile 204 of the contact 202 having the category cluster 228 in the connection model 226 associated with the candidate content 224.

The candidate analysis module 428 can similarly determine, specify, or a combination thereof for the sharing threshold 236 based on a degree of association, such as a quantity of shared instances of the keywords 210 or a distance between, for the category cluster 228 and the candidate content 224. The candidate analysis module 428 can further determine the sharing threshold 236 based on identifying specific instances of the keywords 210 indicating various levels of proprietary rating.

For example, the candidate analysis module 428 can determine the sharing threshold 236 to have a high value when "please do not share" or "confidential" is included in the candidate content 224. Also for example, the candidate analysis module 428 can determine the sharing threshold 236 to be based on number of specified keywords contained in the message, similarity of the file to a previously shared file, image recognition, or a combination thereof.

The candidate analysis module 428 can use the sharing threshold 236 to further determine the sharing target 234. The candidate analysis module 428 can determine the sharing target 234 to exclude the contact 202 having the categorical familiarity level 230 of the category cluster 228 corresponding to the candidate content 224 less than the sharing threshold 236.

For example, the user can include a picture of a tennis court, a picture of the user playing tennis, a message regarding tennis, or a combination thereof in an email or for uploading to a social sharing site. The candidate analysis module 428 can determine the sharing target 234 as only the social sharing sites where the work supervisor is not connected to the user. The candidate analysis module 428 can determine the sharing target 234 to include the work supervisor if the supervisor and the user share a common interest in tennis, where the previous interaction indicate sufficient familiarity level as indicated by the categorical familiarity level 230 relative to the nature of the candidate content 224 as indicated by the sharing threshold 236.

It has been discovered that a combination of the sharing target 234, the sharing threshold 236, the connection model 226 including the category cluster 228 and the categorical familiarity level 230 provides detailed control over subject-specific and contextual sharing of information over multiple dimensions of relationships. The sharing target 234, the sharing threshold 236, and the connection model 226can be used to specify various subjects, topics, or contexts applicable to the user's relationship. The sharing threshold 236 and the categorical familiarity level 230 can limit the access to only the contact 202 having sufficient familiarity or closeness of the relationship with respect to the specific subject, topic, or context indicated by the candidate content 224.

It has also been discovered that the privacy policy 222 having the sharing target 234 and the sharing threshold 236 predicts, expresses, and generates the desired privacy level of the user for the candidate content 224. The sharing target 234 and the sharing threshold 236 of the privacy policy 222 can be based on previous instances of the interaction 212. The computing system 100 can use the previous interactions along with analyzed result of the candidate content 224 to predicts, expresses, and generates the intended recipients for the candidate content 224.

The candidate analysis module 428 can use the first control unit 312, the second control unit 334, or a combination thereof to generate the privacy policy 222. The candidate analysis module 428 can communicate the privacy policy 222 to the user, such as by displaying or recreating sounds, through the first user interface 318, the second user interface 338, or a combination thereof.

The setting adjustment module 430 is configured to finalize the privacy policy 222. The setting adjustment module 430 can finalize the privacy policy 222 by receiving a confirmation or an approval from the user. The setting adjustment module 430 can further finalize the privacy policy 222 by receiving the adjustment feedback 232 of FIG. 2 from the user.

The setting adjustment module 430 can use the first user interface 318, the second user interface 338, or a combination thereof to interact with the user. The setting adjustment module 430 can further include an adjustment interface, such as a screen, a mode, a function, a set of selections, or a combination thereof for allowing the user to alter the privacy policy 222, including the sharing target 234 and the sharing threshold 236.

After generating the privacy policy 222, the control flow can pass from the privacy management module 410 to the distribution module 412. The control flow can pass similarly as described above between the contact identification module 402 and the recording module 404.

The privacy management module 410 can further pass the adjustment feedback 232 to the relationship modeling module 408. The relationship modeling module 408 can update the connection model 226, including the category cluster 228, the categorical familiarity level 230, or a combination thereof based on the adjustment feedback 232.

It has been discovered that the privacy policy 222, the adjustment feedback 232, and the connection model 226 provide a learning and evolving representation of the user's relationships. The privacy policy 222 and the adjustment feedback 232 can represent user's willingness or comfort-level for certain contacts, subject matter, context, or a combination thereof, or represent changes or updates to the user's relationship or a specific aspect thereof. The connection model 226 can store and maintain such willingness, comfort-level, or updates and apply them to subsequent communications.

The distribution module 412 is configured to share or communicate the candidate content 224 based on the privacy policy 222. The distribution module 412 can generate the privacy setting 238 of FIG. 2 based on the privacy policy 222.

For example, the distribution module 412 can generate the privacy setting 238 by determining the correspondence identification in the contact-profile 204 for the contact 202 corresponding to the finalized instance of the privacy policy 222. As a more specific example, the distribution module 412 can generate a list of email addresses, phone numbers, website addresses, or a combination thereof belonging to the contact 202 matching the sharing target 234, having the category cluster 228, the categorical familiarity level 230, or a combination thereof in the connection model 226 satisfying the privacy policy 222, or a combination thereof.

Also for example, the distribution module 412 can generate the privacy setting 238 to include requirements for accessing the candidate content 224 according to the privacy policy 222. As a more specific example, the privacy setting 238 can include a setting or a level specific to the social website. As a further specific example, the privacy setting 238 can include a password limitation, a valid duration for accessing the content, a restriction on subsequent functions, such as downloading or altering, or a combination thereof.

The distribution module 412 can use the first control interface 322, the second control interface 344, or a combination thereof to generate the privacy setting 238. The distribution module 412 can use the first communication unit 316, the second communication unit 336, or a combination thereof to share the candidate content 224 according to the privacy setting 238.

The distribution module 412 can communicate the candidate content 224 based on the privacy setting 238. The distribution module 412 can communicate the candidate content 224, requirements or limitations of the privacy setting 238, or a combination thereof by sending the candidate content 224 to the sharing target 234 identified by the correspondence information portion of the privacy setting 238.

Once the candidate content 224 is sent, the distribution module 412 can store the candidate content 224, corresponding instance of the privacy policy 222, corresponding instance of the adjustment feedback 232, corresponding instance of the privacy setting 238, or a combination thereof as a new instance of the interaction 212 in the first storage unit 314, the second storage unit 346, or a combination thereof. The recording module 404 can subsequently identify the interaction 212 to include the candidate content 224 when the candidate content 224is communicated to the sharing target 234.

It has been discovered that the connection model 226 having the category cluster 228 and the privacy setting 238 based on the privacy policy 222 can enable the user to present partial self-image and protect desired levels of privacy for different aspects of the user's relationship. For example, the user can avoid accidentally sharing a job interview experience with a current work supervisor, such as through a publishing service provider or a social networking site.

It has also been discovered that the privacy policy 222 and the adjustment feedback 232 can give user greater control and lessen the burden on the user for controlling the privacy. The computing system 100 can predict, express, or generate the intended targets and mean for sharing the information with the privacy policy 222. The user can have a starting point with the prediction and provide only the adjustment, which can lessen the burden of correctly identifying the recipients. Further the user can use subjects and abstract topics to control the recipients rather than individually identifying the recipients.

For illustrative purposes, the various modules have been described as being specific to the first device 102 or the second device 106. However, it is understood that the modules can be distributed differently. For example, the various modules can be implemented in a different device, or the functionalities of the modules can be distributed across multiple devices. Also as an example, the various modules can be stored in a non-transitory memory medium.

For a more specific example, the functions of the candidate identification module 426 and the candidate analysis module 428 can be merged and be specific to the first device 102 or the second device 106, such as by being implemented or stored in the first device 102 or the second device 106. Also for a more specific example, the function for determining the candidate subject or the keywords 210 of the candidate analysis module 428 can be specific to the first device 102 and the comparison to the connection model 226 for the candidate analysis module 428can be specific to the second device 106. As a further specific example, one or more modules show in FIG. 4 can be stored in the non-transitory memory medium for distribution to a different system, a different device, a different user, or a combination thereof.

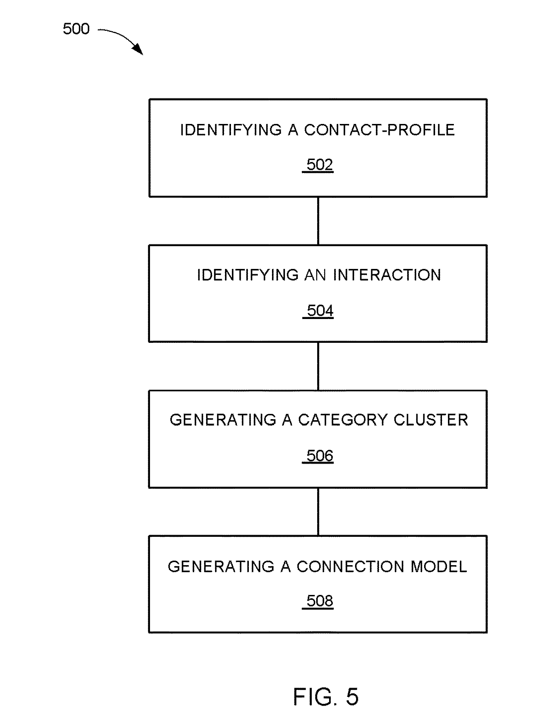

The modules described in this application can be stored in the non-transitory computer readable medium. The first storage unit 314, the second storage unit 546 of FIG. 5, or a combination thereof can represent the non-transitory computer readable medium. The first storage unit 314, the second storage unit 346, or a combination thereof or a portion thereof can be removable from the first device 102 or the second device 106. Examples of the non-transitory computer readable medium can be a non-volatile memory card or stick, an external hard disk drive, a tape cassette, or an optical disk.

Referring now to FIG.5, therein is shown a flow chart of a method 500 of operation of a computing system 100 in a further embodiment of the present invention. The method 500 includes: identifying a contact-profile for representing a contact in a block 502; identifying an interaction with the contact in a block 504; generating a category cluster from processing the interaction in a block 506; and generating a connection model including the category cluster with a control unit for characterizing the interaction with the contact for displaying on a device in a block 508.

It has been discovered that the category cluster 228 of FIG. 2 and the connection model 226 of FIG. 2 provide an accurate representation of relationships for the computing system 100. Further, it has been discovered that the category cluster 228 provides representation of various aspects within a relationship by using groupings and concepts instead of one keyword or set categories.

It has also been discovered that the categorical familiarity level 230 of FIG. 2 corresponding to the category cluster 228 provides an accurate representation of complex nature in various relationships. It has been discovered that a combination of the sharing target 234 of FIG. 2, the sharing threshold 236 of FIG. 2, the connection model 226 including the category cluster 228 and the categorical familiarity level 230 provides detailed control over subject-specific and contextual sharing of information over multiple dimensions of relationships. It has been discovered that the privacy policy 222 of FIG. 2, the adjustment feedback 232 of FIG. 2, and the connection model 226 provide a learning and evolving representation of the user's relationships.

The physical transformation from the connection model 226 and the privacy policy 222 results in the movement in the physical world, such as determining the privacy setting 238 for sharing the candidate content 224 and the contact 202 accessing the candidate content 224 as intended by the user. Movement in the physical world results in sharing and accessing of the candidate content 224 can be fed back into the computing system 100 and captured as the interaction 212, which can be used to further update the connection model 226 and the subsequent instance of the privacy policy 222.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of the present invention is that it valuably supports and services the historical trend of reducing costs, simplifying systems, and increasing performance.

These and other valuable aspects of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A computing system comprising:
a contact identification module configured to identify a contact-profile for representing a contact;
a recording module, coupled to the contact identification module, configured to identify an interaction with the contact;
a clustering module, coupled to the recording module, configured to generate a category cluster from processing the interaction; and
a relationship modeling module, coupled to the clustering module, configured to generate a connection model including the category cluster for characterizing the interaction with the contact for displaying on a device.

2. The system as claimed in claim 1 wherein the relationship modeling module is configured to generate the connection model including a categorical familiarity level associated with the category cluster.

3. The system as claimed in claim 1 further comprising:
a context module, coupled to the contact identification module, configured to determine an environmental context for the interaction; and
wherein:
the clustering module is configured to generate the category cluster based on the environmental context.

4. The system as claimed in claim 1 further comprising:
a context module, coupled to the contact identification module, configured to determine a relational context for the interaction; and
wherein:
the clustering module is configured to generate the category cluster based on the relational context.

5. The system as claimed in claim 1 wherein the relationship modeling module is configured to generate the connection model based on a category-association value for evaluating the category cluster according to a category set.

6. The system as claimed in claim 1 further comprising:
a candidate identification module, coupled to the relationship modeling module, configured to identify a candidate content; and
a candidate analysis module, coupled to the candidate identification module, configured to generate a privacy policy based on the connection model for communicating the candidate content.

7. The system as claimed in claim 6wherein the candidate analysis module is configured to generate the privacy policy based on determining a sharing target or a sharing threshold for communicating the candidate content.

8. The system as claimed in claim 6 further comprising:
a setting adjustment module, coupled to the candidate analysis module, configured to receive an adjustment feedback for altering the privacy policy; and
wherein:
the relationship modeling module is configured to update the connection model based on the adjustment feedback.

9. The system as claimed in claim 6 further comprising:
a distribution module, coupled to the candidate analysis module, configured to communicate the candidate content based on the privacy policy; and
wherein:
the recording module is configured to identify the interaction to include the candidate content.

10. A method of operation of a computing system comprising:
identifying a contact-profile for representing a contact;
identifying an interaction with the contact;
generating a category cluster from processing the interaction; and
generating a connection model including the category cluster with a control unit for characterizing the interaction with the contact for displaying on a device.

11. The method as claimed in claim 10 wherein generating the connection model includes generating the connection model including a categorical familiarity level associated with the category cluster.

12. The method as claimed in claim 10 further comprising:
determining an environmental context for the interaction; and
wherein:
generating the category cluster includes generating the category cluster based on the environmental context.

13. The method as claimed in claim 10 further comprising:
determining an relational context for the interaction; and
wherein:
generating the category cluster includes generating the category cluster based on the relational context.

14. The method as claimed in claim 10 wherein generating the connection model includes generating the connection model based on a category-association value for evaluating the category cluster according to a category set.

15. A non-transitory computer readable medium including instructions comprising:
identifying a contact-profile for representing a contact;
identifying an interaction with the contact;
generating a category cluster from processing the interaction; and
generating a connection model including the category cluster for characterizing the interaction with the contact for displaying on a device.
